Europäisches Patentamt

European Patent Office

Office européen des brevets

(11) Veröffentlichungsnummer: **0 193 011**
**A2**

(12) # EUROPÄISCHE PATENTANMELDUNG

(21) Anmeldenummer: **86101591.5**

(22) Anmeldetag: **07.02.86**

(51) Int. Cl.⁴: **B 60 J 7/195**
**B 60 J 7/05**

(30) Priorität: **23.02.85 DE 3506408**
**23.12.85 DE 3545973**

(43) Veröffentlichungstag der Anmeldung:
**03.09.86 Patentblatt 86/36**

(84) Benannte Vertragsstaaten:
**DE FR GB IT NL**

(71) Anmelder: **Webasto-Werk W.Baier GmbH & Co.**
**Kraillinger Strasse 5 Stockdorf**
**D-8035 Gauting(DE)**

(72) Erfinder: **Srdinko, Klaus-Peter**
**Margaretenanger 3a**
**D-8044 Unterschleissheim(DE)**

(54) **Für den Einbau in Fahrzeuge geeignetes Hebe-und/oder Schiebedach.**

(57) Für den Einbau in Fahrzeuge geeignetes Hebe- und/oder Schiebedach mit einem als Ganzes unterhalb der festen Dachhaut sitzenden und sich gegen deren Innenseite abstützenden Rahmen. Eine entlang dem Rand einer Dachöffnung verlaufende Dichtung wird von dem Rahmen getragen. An dem Rahmen ist ein ausstellbarer und/oder verschiebbarer und/oder abnehmbarer Deckel gehalten, dessen Rand sich in der Dechelschließstellung auf die Dichtung auflegt. Der Rahmen ist mit der festen Dachhaut nur durch eine den Rahmen gegen die Innenseite der Dachhaut anpressende Klemmverbindung verbunden (Figur 1).

FIG. 1

EP 0 193 011 A2

## Beschreibung

Die Erfindung bezieht sich auf ein für den Einbau in Fahrzeuge geeignetes Hebe- und/oder Schiebedach mit einem als Ganzes unterhalb der festen Dachhaut sitzenden und sich gegen deren Innenseite abstützenden Rahmen, einer von dem Rahmen getragenen, entlang dem Rand einer Dachöffnung verlaufenden Dichtung und einem am Rahmen gehaltenen, ausstellbaren und/oder verschiebbaren und/oder abnehmbaren Deckel, dessen Rand sich in der Deckelschließstellung auf die Dichtung auflegt.

Bei einem bekannten Dach dieser Art (Fig. 6 der US-PS 3 972 558) ist der Rahmen mit der Dachhaut vernietet. Die an der Außenseite der Dachhaut liegenden Nietköpfe sind mittels eines Vinylüberzugs überdeckt. Die bekannte Lösung baut zwar über der festen Dachhaut sehr niedrig. Das Vernieten des Rahmens mit der Dachhaut macht jedoch den Einbau schwierig. Beim Bohren der Nietdurchgangslöcher wird leicht die Fahrzeuglackierung beschädigt. Diese Durchgangslöcher bilden außerdem Ansatzstellen für Rost. Der zum Abdecken der andernfalls sichtbaren Nietköpfe erforderliche Vinyl-Dachüberzug ist häufig unerwünscht oder jedenfalls bei nachträglich mit einem Hebe- und/oder Schiebedach auszurüstendem Fahrzeug nicht vorhanden. Bei einer anderen, über der Dachhaut ähnlich flach bauenden Anordnung (EP-PS 0 014 798) wird in die Dachöffnung ein Montagering eingesetzt, an dem dann der den Deckel tragende Rahmen angenietet wird. Der Montagering weist im Bereich eines vorderen Flanschs und zweier seitlicher Flansche, die sich von oben gegen den Rand der Dachöffnung anlegen, nach unten stehende Befestigungsbolzen auf, zu deren Aufnahme Löcher in die Dachhaut gebohrt werden müssen. Dies ist wiederum umständlich und fördert die Rostbildung. Daneben ist es bekannt (DE-PS 32 41 652), den Rahmen zweiteilig auszugestalten, wobei das eine Rahmenteil gegen die Außenseite und das andere Rahmenteil gegen die Innenseite der Dachhaut anliegt und wobei die beiden Rahmenteile miteinander verschraubt werden. Dieser bekannte zweiteilige Dachrahmen baut über der Dachhaut relativ hoch, und die notwendige Verschraubung beider Rahmenteile macht die Montage zeitraubend. Die Montage wird bei einem weiteren bekannten Dach (DE-OS 31 20 817) zwar vereinfacht, das einen von oben aufzusetzenden und mit seinem unteren Teil durch die Dachöffnung hindurchgeführten einteiligen Rahmen aufweist. Der im montierten Zustand über der Dachhaut liegende Teil des Rahmens trägt eine Dichtung. Diese Dichtung wird im Einbauzustand gegen die Außenseite der Dachhaut mittels Federbügeln angepreßt, die sich einerseits am Rahmen und andererseits an der Unterseite der Dachhaut abstützen. Diese Lösung baut über der Dachhaut noch höher. Dies ist aber aus Designgründen und mit Rücksicht auf den angestrebten niedrigen Cw-Wert unerwünscht.

Der im Anspruch 1 angegebenen Erfindung liegt die Aufgabe zugrunde, ein Hebe- und/oder Schiebedach der eingangs genannten Art zu schaffen, das für eine besonders niedrige Bauhöhe über und unter der festen Dachhaut sorgt und eine weiter vereinfachte Montage erlaubt.

Diese Aufgabe wird erfindungsgemäß dadurch gelöst, daß der Rahmen mit der festen Dachhaut nur durch eine den Rahmen gegen die Innenseite der Dachhaut anpressende Klemmverbindung verbunden ist.

Bei dem erfindungsgemäßen Dach stehen keine Rahmenteile über die Dachhaut nach oben vor. Die Anordnung läßt sich insgesamt mit besonders niedriger Bauhöhe ausführen. Zugleich ist durch die vorgesehene Klemmverbindung die Montage entscheidend erleichtert. Es ist nicht notwendig, beispielsweise bei einem nachträglichen Einbau des Hebe- und/oder Schiebedachs zusätzlich zu der Dachöffnung Durchgangslöcher für Befestigungselemente, wie Schrauben oder Niete, in der Dachhaut auszubilden. Die Klemmverbindung kann selbst vom Laien problemlos und sicher hergestellt werden. Unabhängig davon, ob der Einbau nachträglich oder bereits am Montageband des Fahrzeugherstellers erfolgt, brauchen auch keine anderen Befestigungsteile an der Dachhaut angebracht, z. B. mit dieser verschweißt werden.

Zur Verbindung des Rahmens mit der Dachhaut kann in weiterer Ausgestaltung der Erfindung ein Trimmring mit einem nach außen im wesentlichen waagrecht abstehenden, sich gegen die Außenseite der festen Dachhaut im Randbereich der Dachöffnung abstützenden Flansch vorgesehen sein, wobei der Trimmring seinerseits mit dem Rahmen in einer den Rand der Dachöffnung zwischen Trimmring und Rahmen haltenden Klemmverbindung steht. Eine solche Lösung eignet sich insbesondere für den nachträglichen Einbau des Hebe- und/oder Schiebedachs. Nur der Flansch des Trimmrings steht über die Dachhaut nach oben vor. Dieser Flansch läßt sich ohne weiteres flach halten. Entsprechend einer anderen, vor allem für einen Serieneinbau beim Fahrzeughersteller geeigneten Ausgestaltung der Erfindung ist die Dachhaut entlang dem Rand der Dachöffnung nach unten abgekantet, und sie bildet in dem abgekanteten Bereich eine Anlage für ein Klemmteil. Diese Lösungsform kommt ohne Trimmring aus. Es sind keine nach außen sichtbaren Befestigungsteile vorhanden.

Im Interesse erhöhter Sicherheit ist die Klemmverbindung vorzugsweise als rastende Klemmverbindung, beispielsweise unter Verwendung von Rastnasen, ausgebildet. Der Trimmring kann zur Herstellung der Klemmverbindung in den Rahmen unmittelbar eingreifen. Statt dessen ist es auch möglich, Trimmring und Rahmen über mindestens ein zusätzliches Klemmteil miteinander in Eingriff zu bringen. Im
erstgenannten Fall kann der Trimmring einen durch die
Dachöffnung hindurchreichenden Steg aufweisen, der einfach in einen komplementären Schlitz des Rahmens eingerastet wird. Dieser Schlitz kann zu dem auf der Dachhaut
aufliegenden Flansch im wesentlichen senkrecht stehen.
Entsprechend einer abgewandelten Ausführungsform kann der
in den Schlitz einrastbare Steg auch unterhalb des Randes
der Dachöffnung in Abstand von der Unterseite der Dachhaut im wesentlichen parallel zu dem auf der Dachhaut
aufliegenden Flansch verlaufen. Der Rahmen ist vorzugsweise einteilig ausgebildet, obwohl, z. B. im Interesse
einer vereinfachten Herstellung des Rahmens auch mehrteilige Rahmenausbildungen in Betracht kommen. Selbst bei
mehrteiligem Rahmen steht aber der Rahmen als Ganzes
nicht über die feste Dachhaut vor.

Grundsätzlich kommt für die Fertigung des Rahmens jeder
zweckentsprechende Werkstoff, z. B. ein Leichtmetallprofil oder ein Blechprofil, in Betracht. Vorzugsweise besteht der Rahmen mindestens im wesentlichen aus Kunststoff.

Zur weiteren Vereinfachung der Montage sind auf den Rahmen zweckmäßig Anschlußmittel für einen plattenförmigen
Dachhimmel aufsteckbar. Dabei kann es sich vorteilhaft
um ein Abdeckprofil handeln, das den der Dachöffnung zugewendeten Rand des Dachhimmels von unten übergreift, z.B.
eine elastische auslenkbare Lippe aufweist, die von dem
Rahmen in entspanntem Zustand schräg nach oben in Richtung auf die Dachhaut weist. Statt dessen kann auf den Rahmen auch eine Klemmleiste zum Einspannen des dachöffnungsseitigen Randes eines Spannhimmels, zweckmäßig auf der der Dachöffnung zugewendeten Rahmenseite, aufgesteckt sein. Auf diese Weise kann unabhängig von der im Einzelfall vorgesehenen Art des Fahrzeughimmels ein sauberer Anschluß zum Rahmen hergestellt werden.

Eine weitere Montagevereinfachung wird erreicht, wenn die Dichtung auf dem Rahmen über eine Steckverbindung festgelegt ist. Dabei kann die Dichtung zweckmäßig mit mindestens einem in eine komplementäre Aufnahme des Rahmens eingreifenden Steckprofil versehen sein. Statt dessen oder zusätzlich kann die Dichtung mittels des Trimmrings gesichert sein. Durch die Art der Befestigung der Dichtung wird erreicht, daß das Höhenniveau der Dichtung auch an den Übergangsstellen zwischen den seitlichen Teilen des Rahmens und dem vorderen bzw. dem hinteren Teil des Rahmens sich nicht ändert, d. h. die Dichtung an dem geschlossenen Deckel gleichmäßig anliegt. Die Dichtung kann im übrigen vorteilhaft einen ersten Abschnitt aus relativ weichem Werkstoff zur dichtenden Anlage an dem Deckel in dessen Schließstellung und einen z. B. daran anvulkanisierten zweiten Abschnitt aus relativ hartem Werkstoff aufweisen, der die Höhenlage des Deckels in der Deckelschließstellung bestimmt.

Zweckmäßig ist der Rahmen in dem zur Anlage an der Innenseite der Dachhaut bestimmten Bereich mit mindestens einer Aufnahme für eine Dicht- und/oder Klebmasse versehen.

Der Trimmring kann eine Reihe unterschiedlicher Querschnittsformen haben. Besonders zweckmäßig sind ein im wesentlichen Z-förmiger oder ein im wesentlichen C-förmiger Querschnitt. Für den Trimmring kommen unterschiedliche Werkstoffe in Betracht. Vorzugsweise ist der Trimmring aus Metall gefertigt. Auch Kunststofftrimmringe eignen sich bei entsprechender Dimensionierung. Um insbesondere Trimmringe mit Z-, C- oder ähnlichem Querschnitt der
Kontur einer Dachöffnung entsprechend bequem abwinkeln
zu können, kann der Trimmring vorteilhaft mit einer Folge
von Schlitzen versehen sein, die im wesentlichen senkrecht zur Längserstreckung des Trimmrings verlaufen und
von dem Rand des Trimmrings ausgehen, der von dem sich
gegen die Außenseite der Dachhaut abstützenden Flansch
abliegt.

Das Klemmteil ist zweckmäßig auf einem unterhalb der festen Dachhaut und im wesentlichen parallel zu dieser verlaufenden Flansch der Dachhautabkantung bzw. des Trimmrings abgestützt. Es kann vorteilhaft einen im wesentlichen V-förmigen Querschnitt haben sowie mit seinem einen
Schenkel an der Dachhautabkantung bzw. an dem Trimmring
anliegen und mit dem oberen Rand seines anderen Schenkels
unter eine Nase des Rahmens greifen.

Die Erfindung ist im folgenden an Hand von bevorzugten
Ausführungsbeispielen näher erläutert. In den beiliegenden Zeichnungen zeigen:

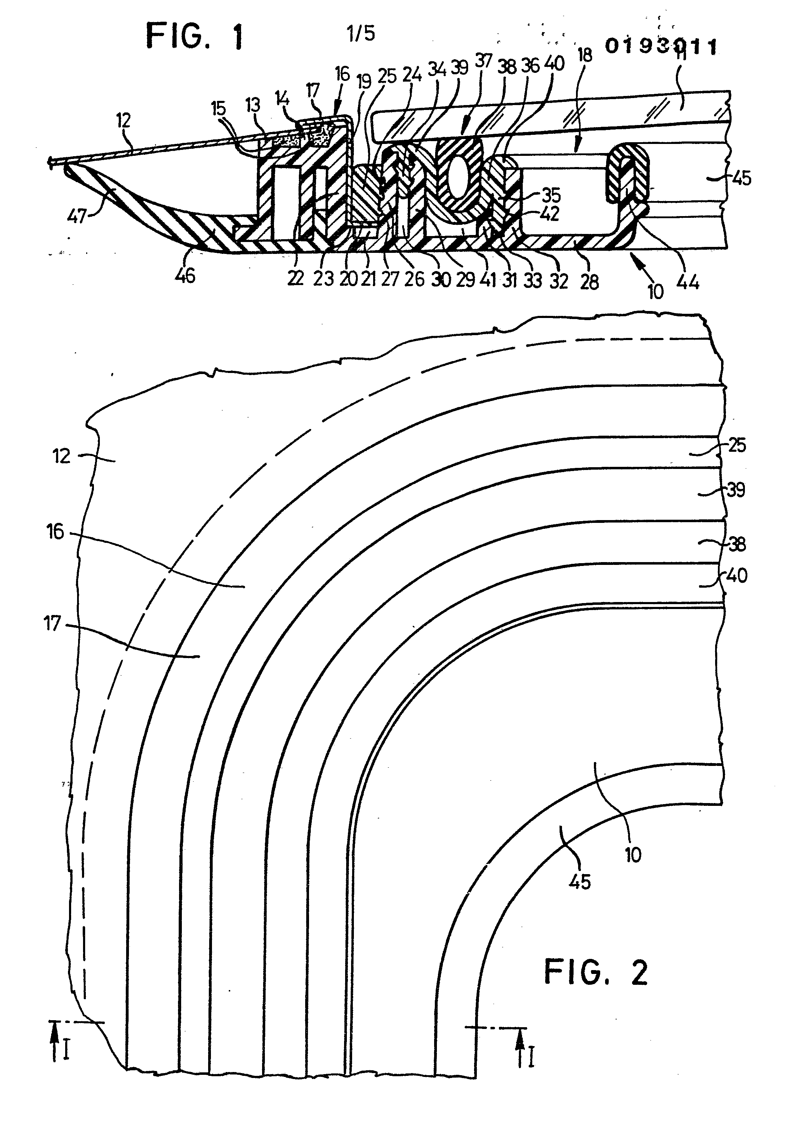

Fig. 1          einen Teilschnitt durch ein erfindungsgemäß
                ausgebildetes Hebedach entlang der Linie I-I
                der Fig. 2,

Fig. 2          eine Teildraufsicht auf das Dach gemäß Fig
                1 ohne Deckel,

Fig. 3,4,5  Teilschnitte durch abgewandelte Ausführungsformen von Hebedächern,

Fig. 6        eine perspektivische Teilansicht eines bei
              dem Hebedach gemäß Fig. 5 vorgesehenen federnden Halteprofils,

Fig. 7        einen Teilschnitt ähnlich den Figuren 3 bis
              5 für ein weiter abgewandeltes Hebedach,

Fig. 8        eine perspektivische Teilansicht des bei der
              Ausführungsform gemäß Fig. 1 verwendeten
              Trimmrings,

Fig. 9        einen Teilschnitt durch eine weiter abgewandelte Ausführungsform

Fig. 10       eine perspektivische Schnittansicht eines erfindungsgemäßen Hebedachs mit Trimmring im
              vorderen Bereich des Daches, und

Fig. 11       eine perspektivische Schnittansicht ähnlich

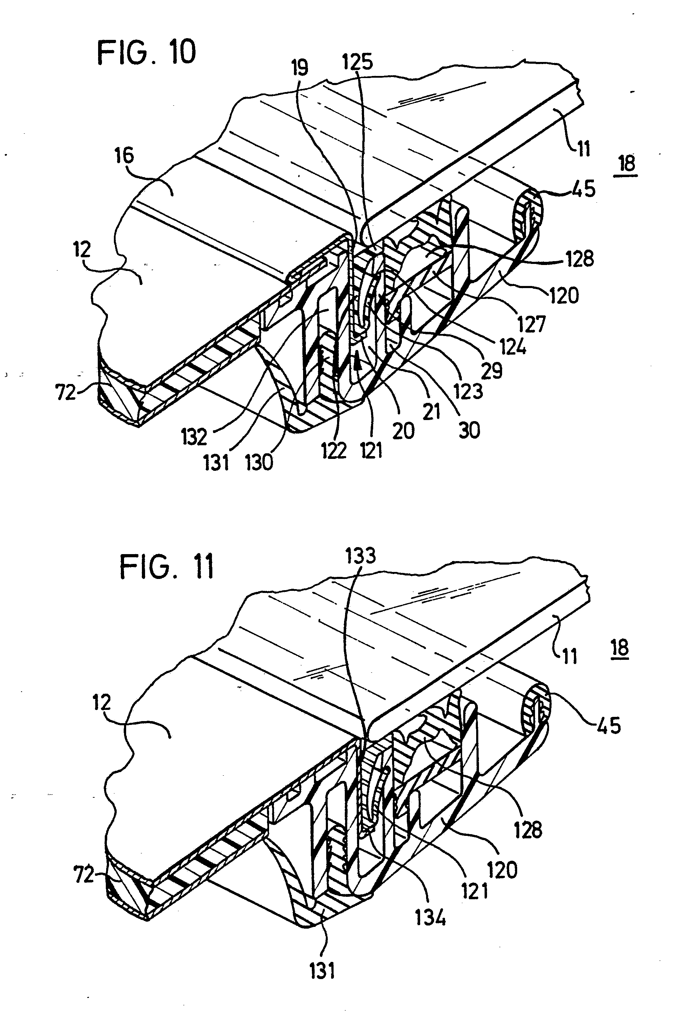

              Fig. 10 für eine trimmringlose Ausführung.

Das Hebedach gemäß den Fig. 1 und 2 weist einen einteiligen Kunststoffrahmen 10 auf, der in an sich bekannter,
nicht näher dargestellter Weise einen abnehmbaren Deckel
11, beispielsweise aus durchsichtigem oder durchscheinendem Werkstoff, trägt, der durch eine Schwenkbewegung um
eine nahe seiner Vorderkante liegende Achse mit seiner
Hinterkante über die feste Dachhaut 12 ausgestellt werden
kann. Das Ausstellen kann beispielsweise über einen Klappgriff, einen handbetätigten Drehgriff oder eine motorisch
angetriebene Ausstellvorrichtung erfolgen (z.B. in der
aus DE-PS 25 08 487, DE-PS 27 10 193 bzw. DE-PS 31 14 502
bekannten Weise). In dem in den Figuren veranschaulichten
montierten Zustand sitzt der Rahmen 10 unterhalb der
Dachhaut 12. Er stützt sich dabei mit Nasen 13, 14 an der
Unterseite der Dachhaut ab. Die Nasen 13, 14 begrenzen
rillenförmige Aufnahmeräume für eine Dicht- oder Klebmasme 15. Ein im Querschnitt im wesentlichen Z-förmiger Trimmring 16, der beispielsweise als Blech- oder Strangpreßprofilteil ausgebildet ist, weist einen Flansch 17
auf. Der Flansch 17 steht nach außen im wesentlichen
waagrecht ab und legt sich im Randbereich einer mittels
des Deckels 11 verschließbaren Dachöffnung 18 gegen die
Außenseite der Dachhaut 12 an. Ein Steg 19 des Trimmrings
16 greift durch die Dachöffnung 18 hindurch. Vom unteren
Ende des Steges 19 ist ein weiterer Flansch 20 nach innen
abgewinkelt. Der Steg 19 und der Flansch 20 greifen in
einen umlaufenden Schlitz 21 des Rahmen 10 ein. Dabei
liegt der Steg 19 an der äußeren Begrenzungswand 22 der
Nut 21 an, während der Flansch 20 mit seinem an den Steg
19 anschließenden Ende auf einer Schulter 23 der Begrenzungswand 22 aufsitzt. Ein mit Rastnasen 24 versehenes
Klemmteil 25, bei dem es sich beispielsweise um Profilmeterware handeln kann, ist über dem Flansch 20 in die
Nut 21 eingepreßt. Das Klemmteil 25 legt sich dabei seitlich an den Steg 19 und die der äußeren Begrenzungswand
22 gegenüberliegende innere Begrenzungswand 26 der Nut
21 an. Dabei greifen die Rastnasen 24 in komplementäre
Rastausnehmungen 27 der Begrenzungswand 26.

Die innere Begrenzungswand 26 bildet zusammen mit einer
dazu parallelen, gleichfalls von der Bodenwand 28 des
Rahmens 10 hochstehenden Wand 29, einen Spalt 30. Nach
innen in Abstand von den Wänden 26, 28 verlaufen zwei
weitere parallele, hochstehende Stege oder Wände 31, 32,
die zwischen sich einen Spalt 33 begrenzen. Die Spalte
30, 33 dienen der Aufnahme eines außenliegenden Steckprofils 34 bzw. eines innenliegenden Steckprofils 35, die
von einem ersten, relativ harten Teil 36 einer insgesamt
mit 37 bezeichneten Dichtung nach unten abstehen. Ein
zweiter, relativ weicher Teil 38 der Dichtung 37, der im
veranschaulichten Ausführungsbeispiel ein Hohlkammerprofil hat, ist mit dem harten Teil 36 fest verbunden, vorzugsweise an diesem anvulkanisiert. Der harte Teil 36 hat einen M-ähnlichen Querschnitt, wobei ein äußerer Steg 39 des harten Teils 36 höher reicht als ein innerer Steg 40 dieses Teils. Der weiche Teil 38 der Dichtung 37 ist von einer von den Stegen 39, 40 begrenzten Nut 41 aufgenommen und ragt im entspannten Zustand nach oben über den höheren äußeren Steg 39 vor. Die Steckprofile 34, 35 tragen Rastnasen 42, die sich beim Aufstecken der Dichtung 37 auf den Rahmen 10 in entsprechende Rastausnehmungen an den Begrenzungswänden der Spalte 30, 31 einlegen. Wenn der Deckel 11 in die in Fig. 1 dargestellte Schließstellung gebracht ist, wird der weiche Teil 38 der Dichtung 37 zusammengedrückt, bis der Rand des Deckels 11 auf dem oberen Ende des äußeren Stegs 39 aufliegt. Dieser äußere Steg des harten Teils 36 der Dichtung 37 bestimmt die Höhenlage des Deckels 11 in seiner Schließstellung.

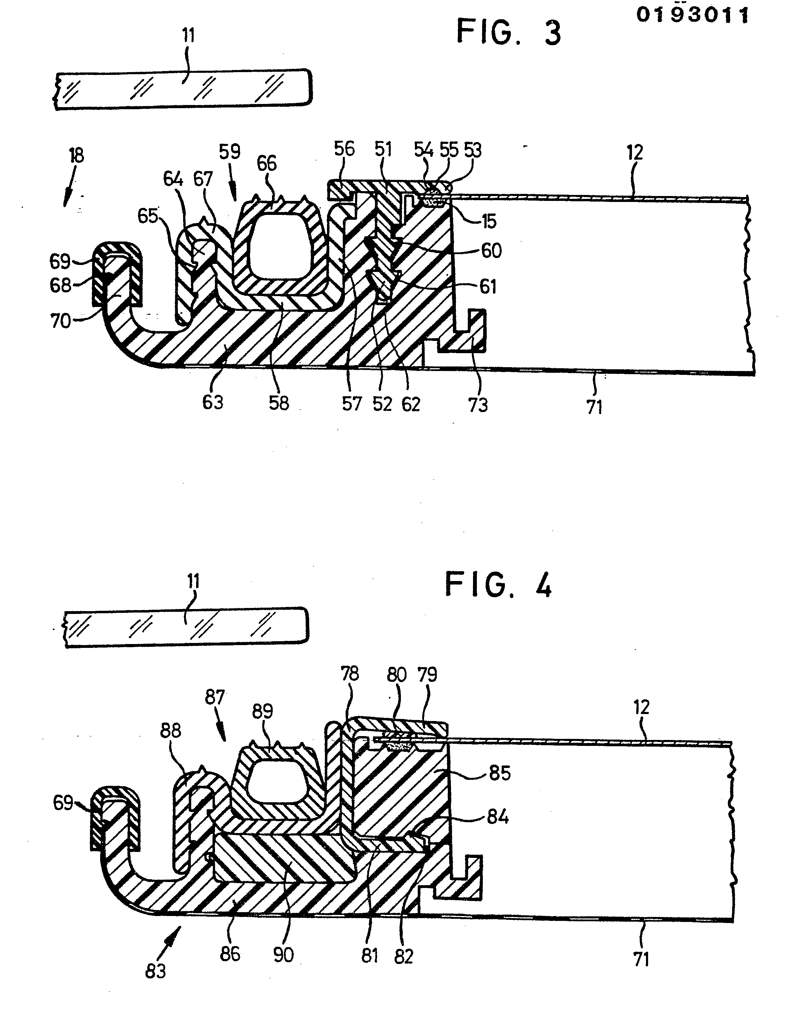

Auf die Innenwand 44 des Rahmens 10 kann eine Klemmleiste 45 aufgesteckt sein. Die Klemmleiste erlaubt es, den dachöffnungsseitigen Rand eines Spannhimmels (entsprechend den Darstellungen in den Fig. 3 und 4) einzuspannen. Statt dessen oder zusätzlich kann auf die außenliegende Seite des Rahmens 10 ein Abdeckprofil 46 aufgesteckt sein, das eine elastisch auslenkbare Lippe 47 aufweist, die von dem Rahmen 10 im entspannten Zustand schräg nach oben in Richtung auf die Dachhaut verläuft.

Für den nachträglichen Einbau des erläuterten Hebedachs wird in die Dachhaut 12 die Dachöffnung 18 eingeschnitten, ohne daß eine weitere Behandlung der Dachhaut, beispielsweise das Bohren von Befestigungslöchern, erfolgt. In die von den Nasen 13, 14 begrenzten Aufnahmeräume wird die Dicht- oder Klebmasse 15 eingebracht. Dann wird der Rahmen 10 von unten gegen die Dachhaut gedrückt, wobei die Masse 15 vorzugsweise für eine vorläufige Fixierung sorgt. Der Trimmring 16 wird von oben in die Dachöffnung 18 eingesetzt. Dabei legt sich ein Flansch 17 gegen die Außenseite der Dachhaut 12 an.- Dann wird das Klemmteil 25 in den Schlitz 21 zwischen dem Steg 19 und der Begrenzungswand 26 des Rahmens 10 eingedrückt. Das Klemmteil 25 legt sich auf den unteren Flansch 20 des Trimmrings 16 auf. Gleichzeitig rasten seine Nasen 24 in die Rastausnehmungen 27 ein. Gegebenenfalls wird mittels der Klemmleiste 45 noch der entsprechend ausgeschnittene Spannhimmel des Fahrzeugs eingeklemmt. Das geschilderte Dach läßt sich also in kürzester Zeit auch vom Laien problemlos montieren. Es ragt über die Dachhaut 12 kaum vor.

Bei der abgewandelten Aufführungsform gemäß Fig. 3 ist ein Trimmring 51 vorgesehen, der einen im wesentlichen T-förmigen Querschnitt hat. Der von einem Mittelsteg 52 nach außen weisende Flansch 53 legt sich gegen die Außenseite der Dachhaut 12 an. An der Unterseite des Flanschs 53 befindet sich eine Rille 54 zur Aufnahme von Dicht- oder Klebmasse 55. Ein vom Mittelsteg 52 aus nach innen in Richtung auf die Dachöffnung 18 vorstehender Flansch 56 übergreift den Außensteg 57 eines relativ harten Teils 58 einer Dichtung 59, wodurch die Dichtung 59 im montierten Zustand des Dachs vom Trimmring 51 zusätzlich gesichert wird. Der Mittelsteg 52 ist mit Rastnasen 60 ausgestattet. Die Rastnasen 60 legen sich in Rastausnehmungen 61 an den Begrenzungswänden eines Schlitzes 62 eines Kunststoffrahmens 63 ein, wenn das Dach am Fahrzeug montiert wird. Der Rahmen 63 stützt sich ebenso wie der Rahmen 10 an der Unterseite der Dachhaut 12 ab, und er trägt auf nicht näher dargestellte, an sich bekannte Weise den Deckel 11. An der mit der Dachhaut 12 in Eingriff kommenden Oberseite des Rahmens 63 befindet sich ein rillenför-

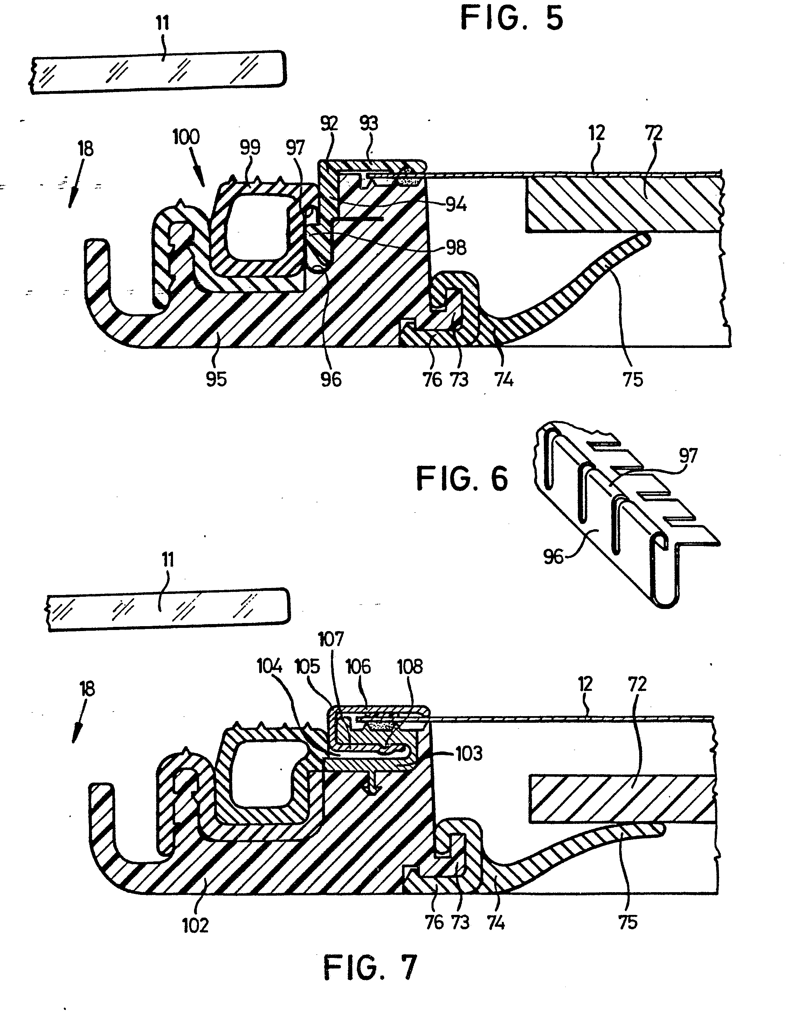

miger Aufnahmeraum für die Dicht- oder Klebmasse 15. Der harte Teil 58 der Dichtung 59 ist auf einen hochstehenden Steg 64 des Rahmens 63 aufgesteckt und dort über Rastnasen 65 gehalten. Ähnlich wie im Falle der Dichtung 37 weist die Dichtung 59 einen weichen Teil 66 mit Hohlkammerprofil auf, der mit dem harten Teil 58 fest verbunden ist und für die Abdichtung gegenüber dem Deckel 11 in dessen Schließstellung sorgt. Die Höhenlage des geschlossenen Deckels 11 wird bei dieser Ausführungsform von dem auf dem Steg 64 aufsitzenden Abschnitt 67 des harten Teils 58 der Dichtung 59 bestimmt. Eine mit Rastnase 68 versehene Klemmleiste 69 kann auf eine Innenwand 70 des Rahmens 63 aufgesteckt werden, um einen bei 71 angedeuteten Spannhimmel zu fixieren. Das Fahrzeug kann aber auch mit einem in den Figuren 5 und 6 bei 72 veranschaulichten harten oder weichen, plattenförmigen Dachhimmel ausgestattet sein. Um in einem solchen Fall einen sauberen Abschluß zu schaffen, wird auf einen Haken 73 an der von der Dachöffnung abgewendeten Außenseite des Rahmens 63 ein Abdeckprofil 74 mit Lippe 75 ähnlich dem Abdeckprofil 46 aufgesteckt. Das Abdeckprofil 74 kann einen mit dem Haken 73 zusammenwirkenden Halterungsteil 76 aus relativ hartem Werkstoff aufweisen, an dem die Lippe 75 fest angebracht, z. B. anvulkanisiert, sein kann, wie dies gleichfalls in den Fig. 5 und 6 dargestellt ist.

Im Falle der Ausführungsform gemäß Fig. 4 hat der Trimmring 78 einen im wesentlichen C-förmigen Querschnitt. Ein nach außen stehender oberer Flansch 79 des Trimmrings 78 legt sich, beispielsweise unter Zwischenfügung eines Dichtstreifens 80, gegen die Außenseite der Dachhaut 12 an. In Abstand und im wesentlichen parallel zu dem Flansch 79 verläuft ein weiterer Flansch 81 des Trimmrings 78, der bei der Montage des Dachs in einen im wesentlichen waagrechten Schlitz 82 eines Kunststoffrahmens 83 eingesteckt und dort über eine Rastnase 84 fixiert wird. Im Interesse einer leichteren Fertigung des Rahmens 83 kann dieser aus zwei Teilen 85, 86 bestehen, die bei der Montage zusammengefügt, beispielsweise untereinander verschraubt, ultraschallverschweißt oder verklebt werden. Eine Dichtung 87 besteht wiederum aus einem harten und einem weichen Teil 88 bzw. 89. Sie entspricht weitestgehend der Dichtung 59. Unterhalb der Dichtung 87 sitzt bei dieser Ausführungsform ein Kunststoffkeil 90, dessen Aufgabe es ist, den Trimmring 78 zu sichern. Im übrigen stimmen Aufbau und Funktionsweise des Daches mit denen der Ausführungsform gemäß Fig. 3 überein.

Eine weitere ähnliche Ausführungsform ist in Fig. 5 dargestellt. Dort hat der Trimmring 92 einen im wesentlichen umgekehrt L-förmigen Querschnitt. Er legt sich mit einem nach außen abstehenden Flansch 93 gegen die Außenseite der Dachhaut 12 an, während er mit einem vom Flansch 93 im wesentlichen senkrecht nach unten abstehenden Steg 94 in die Dachöffnung 18 hineinragt. In einen einteiligen Kunststoffrahmen 95 ist eine Federleiste 96 (Fig. 6) eingesetzt, z. B. eingespritzt. Die Federleiste 96 weist eine umgekehrt U-förmig abgewinkelte Haltenase 97 auf. Unter dieser Haltenase 97 schiebt sich beim Montieren des Dachs eine Rastnase 98 am Steg 94 des Trimmrings 92. Der weiche Teil 99 einer zweiteiligen Dichtung 100 übergreift die Haltenase 97. Bei diesem Ausführungsbeispiel ist anstelle des in den Fig. 3 und 4 gezeigten Spannhimmels 71 der plattenförmige Dachhimmel 72 vorgesehen. Auf den Haken 73 des Rahmens 95 ist das Abdeckprofil 74 mit der sich an den Dachhimmel 72 anlegenden Lippe 75 aufgesteckt. Die Klemmleiste 69 kann entfallen. Im übrigen entspricht diese Ausführungsform wiederum den zuvor erläuterten Ausführungsbeispielen.

Bei der Ausführungsform gemäß Fig. 7 ist mit einem Kunststoffrahmen 102 ein vorzugsweise aus Metall bestehendes
Klemmprofil 103 verbunden, beispielsweise eingespritzt,
das einen Querschnitt entsprechend einem liegenden U hat
und einen zur Dachöffnung 18 hin offenen Schlitz 104 bildet. Ein Trimmring 105 mit einem gleichfalls im wesentlichen U-förmigen Querschnitt legt sich mit seinem oberen
Flansch 106 gegen die Außenseite der Dachhaut 12 an, während der untere Flansch 107 im montierten Zustand in den
Schlitz 104 eingreift und dort mittels einer Rastnase 108
des Klemmprofils 103 gesichert ist.

Fig. 7 zeigt einen in Abstand unterhalb der Dachhaut 12
liegenden Dachhimmel 72. Es ist zu erkennen, daß die
flexible Lippe 75 des Abdeckprofils 74 auch in diesem
Fall einen sauberen Abschluß erlaubt. Grundsätzlich die
gleiche Konstruktion kann infolgedessen für Fahrzeuge mit
unterschiedlich gestalteten Dachhimmeln vorgesehen werden.

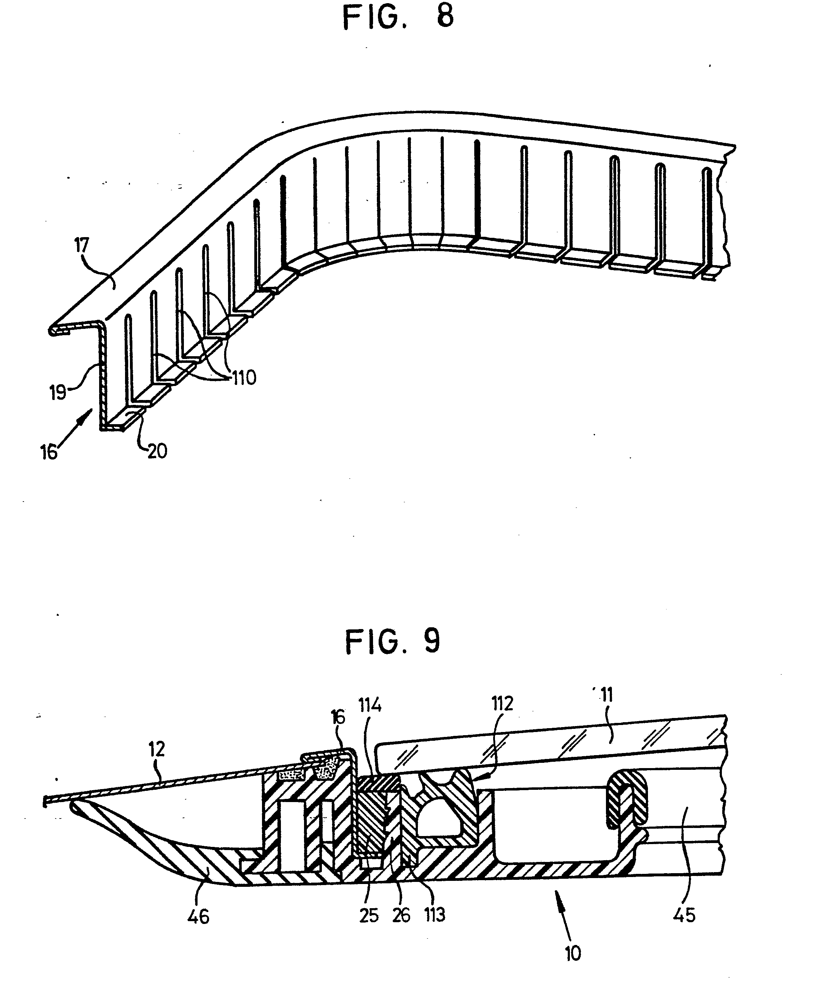

Aus der perspektivischen Teilansicht des Trimmrings 16
gemäß Fig. 8 ist zu erkennen, daß der Trimmring mit einer
Folge von Schlitzen 110 versehen ist. Die Schlitze 110
verlaufen im wesentlichen senkrecht zur Längserstreckung
des Trimmrings 16. Sie gehen von der vom Flansch 17 abliegenden Seite des Trimmrings aus und reichen durch den
Flansch 20 und einen Teil des Stegs 19 hindurch. Auf Grund
der Schlitze 110 kann der Trimmring problemlos in die in
den Fig. 2 und 8 dargestellte Form gebracht werden, in
welcher er den Ecken der Dachöffnung 18 folgt.

Entsprechende Schlitze sind vorzugsweise auch bei den
Trimmringausführungen gemäß den Fig. 4 und 7 vorgesehen.

Die weiter abgewandelte Ausführungsform gemäß Fig. 9 ist weitgehend ähnlich derjenigen nach Fig. 1. Anstelle der zweiteiligen Dichtung 37 ist in diesem Falle eine einteilige Dichtung 112 vorgesehen, die mit einer Nase 113 in eine komplementäre Rahmenausnehmung eingreift. Das Klemmteil 25 ist so bemessen, daß es im wesentlichen bündig mit der Oberkante der Begrenzungswand 26 endet. Mit dem oberen Ende des Klemmteils 25 ist eine Abdeckung 114 verbunden, die vorzugsweise aus hartelastischem Werkstoff besteht und die sich im montierten Zustand über die Oberseite der Begrenzungswand 26 hinwegerstreckt. Die Abdeckung 114 erlaubt eine besonders bequeme Handhabung des Klemmteils 25 bei der Montage. Gleichzeitig kann die Abdeckung 114 die Funktion eines in Höhe des Deckels 11 im Schließzustand bestimmenden Anschlags übernehmen. Gegebenenfalls können das Klemmteil 25 und die Abdeckung 114 auch einteilig ausgebildet sein.

Obwohl das vorstehend erläuterte Dach für den nachträglichen Einbau geeignet und in Verbindung damit im einzelnen beschrieben ist, versteht es sich, daß das Dach in seiner Anwendung auf einen nachträglichen Einbau nicht beschränkt ist. Vielmehr kann das vorliegende Dach auch unmittelbar beim Kraftfahrzeughersteller sofort am Fertigungsband in die Fahrzeugkarosserie eingebaut werden.

Bei der abgewandelten Ausführungsform gemäß Fig. 10 sind ein Trimmring 16 gemäß den Figuren 1 und 9 sowie ein Rahmen 120 ähnlich demjenigen der Ausführungsform gemäß Fig. 9 vorgesehen. Der Trimmring 16 greift mit seinem Steg 19 und seinem Flansch 20 in den Schlitz 21 des Rahmens 120 ein. Auf dem im wesentlichen parallel zu der festen Dachhaut 12 verlaufenden Flansch 20 des Trimmrings 16 ist ein leistenförmiges Klemmteil 121 mit im wesentlichen V-förmigem Querschnitt abgestützt. Das Klemmteil 121 weist einen äußeren Schenkel 122 und einen inneren Schenkel 123 auf. Der äußere Schenkel 122 liegt an dem Steg 19 des Trimmrings 16 an, während der innere Schenkel 123 mit seinem oberen Rand unter eine nach außen vorspringende Nase 124 greift, die am oberen Ende der den Schlitz 21 an seiner Innenseite begrenzenden Wand 29 ausgebildet ist. Der äußere Schenkel 122 des Klemmteils 121 setzt sich an seinem oberen Ende in einem nach innen gerichteten Flansch 125 fort, der auf der Oberkante der Wand 29 aufliegt und der mit seiner Oberseite eine im wesentlichen starre Auflagefläche für den Deckel 11 bildet. Ein Steckprofil 127 einer insgesamt mit 128 bezeichneten Dichtung ist in den Spalt 30 des Rahmens 120 eingesteckt. Ein Steckprofil 130 eines funktionsmäßig dem Abdeckprofil 74 der Figuren 5 und 7 entsprechenden Abdeckprofils 131 greift in einen sich nach unten öffnenden Rahmenschlitz 132 ein.

Die Ausführungsform gemäß Fig. 11 stimmt mit derjenigen nach Fig. 10 mit der Ausnahme überein, daß die feste Dachhaut 12 entlang dem Rand der Dachöffnung 18 derart nach unten abgekantet ist, daß die Dachhaut selbst einen Steg 133 und einen Flansch 134 bilden, welche dem Steg 19 bzw. dem Flansch 20 des Trimmrings 16 gemäß Fig. 10 entsprechen. Diese insbesondere für einen Serieneinbau beim Fahrzeughersteller geeignete Ausführungsform kommt also ohne Trimmring aus.

DP 122/85 i

Webasto-Werk W. Baier GmbH & Co
Kraillinger Straße 5, 8035 Gauting

Für den Einbau in Fahrzeuge
geeignetes Hebe- und/oder Schiebedach

Patentansprüche

1. Für den Einbau in Fahrzeuge geeignetes Hebe- und/oder Schiebedach mit einem als Ganzes unterhalb der festen Dachhaut sitzenden und sich gegen deren Innenseite abstützenden Rahmen, einer von dem Rahmen getragenen, entlang dem Rand einer Dachöffnung verlaufenden Dichtung und einem am Rahmen gehaltenen, ausstellbaren und/oder verschiebbaren und/oder abnehmbaren Deckel, dessen Rand sich in der Deckelschließstellung auf die Dichtung auflegt, d a d u r c h  g e k e n n - z e i c h.n e t , daß der Rahmen (10, 63, 83, 95, 102, 120) mit der festen Dachhaut (12) durch eine den Rahmen gegen die Innenseite der Dachhaut anpressende Klemmverbindung verbunden ist.

2. Dach nach Anspruch 1, dadurch gekennzeichnet, daß zur Verbindung des Rahmens (10, 63, 83, 95, 102, 120) mit der Dachhaut (12) ein Trimmring (16, 51, 78, 92, 105) mit einem nach außen im wesentlichen waagrecht abstehenden, sich gegen die Außenseite der festen Dachhaut im Randbereich der Dachöffnung (18) abstützenden Flansch (17, 53, 79, 93, 106) vorgesehen ist und der

2

Trimmring mit dem Rahmen in einer den Rand der Dachöffnung zwischen Trimmring und Rahmen haltenden
Klemmverbindung steht.

3. Dach nach Anspruch 1, dadurch gekennzeichnet, daß die
Dachhaut (12) entlang dem Rand der Dachöffnung (18)
nach unten abgekantet ist und in dem abgekanteten Bereich eine Anlage (Steg 133, Flansch 134) für ein
Klemmteil (121) bildet.

4. Dach nach einem der vorhergehenden Ansprüche, dadurch
gekennzeichnet, daß die Klemmverbindung als rastende
Klemmverbindung ausgebildet ist.

5. Dach nach Anspruch 2 oder 4, dadurch gekennzeichnet,
daß der Trimmring (51, 78, 105) zur Herstellung der
Klemmverbindung in den Rahmen (63, 83, 102) unmittelbar eingreift.

6. Dach nach Anspruch 5, dadurch gekennzeichnet, daß der
Trimmring (51, 78, 105) einen durch die Dachöffnung
(18) hindurchgreifenden Steg (52, 81, 107) aufweist,
der in einen komplementären Schlitz (62, 82, 104) des
Rahmens (63, 83, 102) einrastbar ist.

7. Dach nach Anspruch 5, dadurch gekennzeichnet, daß der
in den Schlitz (62) einrastbare Steg (52) zu dem auf
der Dachhaut (12) aufliegenden Flansch (53) im wesentlichen senkrecht steht.

8. Dach nach Anspruch 5, dadurch gekennzeichnet, daß der
in den Schlitz (82, 104) einrastbare Steg (81, 107)
unterhalb des Randes der Dachöffnung (18) in Abstand
von der Unterseite der Dachhaut (12) im wesentlichen

3

parallel zu dem auf der Dachhaut aufliegenden Flansch (79, 106) verläuft.

9. Dach nach Anspruch 2 oder 4, dadurch gekennzeichnet, daß der Trimmring (16) mit dem Rahmen (10) über mindestens ein zusätzliches Klemmteil (25) in Eingriff bringbar ist.

10. Dach nach einem der vorhergehenden Ansprüche, dadurch gekennzeichnet, daß der Rahmen (10, 63, 95, 102) einteilig ausgebildet ist.

11. Dach nach einem der vorhergehenden Ansprüche, dadurch gekennzeichnet, daß der Rahmen (10, 63, 83, 95, 102) mindestens im wesentlichen aus Kunststoff gefertigt ist.

12. Dach nach einem der vorhergehenden Ansprüche, dadurch gekennzeichnet, daß auf den Rahmen (10, 63, 83, 95, 102) Anschlußmittel (46, 74) für einen plattenförmigen Dachhimmel (72) aufgesteckt sind.

13. Dach nach Anspruch 12, dadurch gekennzeichnet, daß auf den Rahmen (10, 63, 83, 95, 102) eine Klemmleiste (45, 69) zum Einspannen des dachöffnungsseitigen Randes eines Spannhimmels (71) aufgesteckt ist.

14. Dach nach Anspruch 13, dadurch gekennzeichnet, daß die Klemmleiste (45, 69) im Bereich der der Dachöffnung (18) zugewendeten Seite des Rahmens (10, 63, 83, 95, 102) sitzt.

15. Dach nach Anspruch 12, dadurch gekennzeichnet, daß auf den Rahmen (10, 63, 83, 95, 102) ein Abdeckprofil

4

(46, 74) aufgesteckt ist, das den der Dachöffnung (18) zugewendeten Rand eines Dachhimmels (72) von unten übergreift.

16. Dach nach Anspruch 15, dadurch gekennzeichnet, daß das Abdeckprofil (46, 74) eine elastisch auslenkbare Lippe (47, 75) aufweist, die im entspannten Zustand von dem Rahmen (10, 63, 83, 95, 102) schräg nach oben in Richtung auf die Dachhaut (12) weist.

17. Dach nach einem der vorhergehenden Ansprüche, dadurch gekennzeichnet, daß die Dichtung (37, 59, 87, 100) auf dem Rahmen (10, 63, 83, 95, 102) über eine Steckverbindung festgelegt ist.

18. Dach nach Anspruch 17, dadurch gekennzeichnet, daß die Dichtung (37) mit mindestens einem in eine komplementäre Aufnahme (Spalt 30) des Rahmens (10) eingreifenden Steckprofil (34) versehen ist.

19. Dach nach Anspruch 17 oder 18, dadurch gekennzeichnet, daß die Dichtung (59) mittels des Trimmrings (51) gesichert ist.

20. Dach nach einem der Ansprüche 15 bis 17, dadurch gekennzeichnet, daß die Dichtung (37, 59, 87, 100) einen ersten Teil (38, 66, 89, 99) aus relativ weichem Werkstoff zur dichtenden Anlage an dem Deckel (11) in dessen Schließstellung und einen zweiten Teil (36, 58, 88) aus relativ hartem Werkstoff aufweist, der die Höhenlage des Deckels in der Schließstellung bestimmt.

21. Dach nach einem der vorhergehenden Ansprüche, dadurch gekennzeichnet, daß der Rahmen (10, 63, 83, 95, 102) in den zur Anlage an der Innenseite der Dachhaut bestimmten Bereich mit mindestens einer Aufnahme für eine Dicht- und/oder Klebmasse versehen ist.

22. Dach nach einem der Ansprüche 2 oder 4 bis 21, dadurch gekennzeichnet, daß der Trimmring (16) einen im wesentlichen Z-förmigen Querschnitt hat.

23. Dach nach einem der Ansprüche 2 oder 4 bis 21, dadurch gekennzeichnet, daß der Trimmring (78, 105) einen im wesentlichen C-förmigen Querschnitt hat.

24. Dach nach einem der Ansprüche 2 oder 4 bis 23, dadurch gekennzeichnet, daß der Trimmring (16, 105) aus Metall besteht.

25. Dach nach einem der Ansprüche 2 oder 4 bis 24, dadurch gekennzeichnet, daß der Trimmring (16, 78, 105) mit einer Folge von Schlitzen (110) versehen ist, die im wesentlichen senkrecht zur Längserstreckung des Trimmrings verlaufen und von dem Rand des Trimmrings ausgehen, der von dem sich gegen die Außenseite der Dachhaut (12) abstützenden Flansch (17) abliegt.

26. Dach nach Anspruch 9, dadurch gekennzeichnet, daß das Klemmteil (25) mit einem verbreiterten oberen Abdeckteil (114) ausgestattet ist.

27. Dach nach Anspruch 3 oder 9, dadurch gekennzeichnet, daß das Klemmteil (121) auf einem unterhalb der festen Dachhaut (12) und im wesentlichen parallel zu dieser verlaufenden Flansch (19, 134) der Dachhautabkantung bzw. des Trimmringes (16) abgestützt ist.

28. Dach nach Anspruch 3, 9 oder 27, dadurch gekennzeichnet, daß das Klemmteil (121) im wesentlichen V-förmigen Querschnitt hat sowie mit seinem einen Schenkel (122) an der Dachhautabkantung bzw. an dem Trimmring (16) anliegt und mit dem oberen Rand seines anderen Schenkels (123) unter eine Nase (124) des Rahmens (120) greift.

FIG. 1

1/5

0193011

FIG. 2

0193011

# FIG. 3

# FIG. 4

0193011

## FIG. 5

11

18  100  99  97  92  93  12  72

94

98

95  96  76 73  74  75

## FIG. 6

97

96

11

18  104 105  107  106  108  12  72

103

102  76 73  74  75

## FIG. 7

0193011

# FIG. 8

# FIG. 9

0193011

FIG. 10

FIG. 11